# EUROPEAN PATENT SPECIFICATION

(11) **EP 3 704 315 B1**
(45) Date of publication and mention of the grant of the patent: **07.09.2022**
(21) Application number: 18811413.6
(22) Date of filing: 01.11.2018
(51) Int. Cl.: G08C 17/02, E02F 9/20, E02F 9/26, G08C 17/00, E02F 9/24, B62D 55/06, E02F 3/34

(54) **REMOTELY OPERATED POWER MACHINE**
FERNBEDIENTE KRAFTMASCHINE
MACHINE À MOTEUR TÉLÉCOMMANDÉE

(30) Priority: 01.11.2017 US 201762580176 P
(43) Date of publication of application: 09.09.2020
(73) Proprietor: Clark Equipment Company, West Fargo, ND 58078-6000 (US)
(72) Inventor: PFAFF, John, Bismarck ND 58504 (US); HOFFERT, Phil, Bismarck ND 58503 (US); FEICKERT, Ryan, Mandan ND 58554 (US)
(74) Representative: Vossius & Partner Patentanwälte Rechtsanwälte mbB
(86) International application number: PCT/US2018/058733
(87) International publication number: WO 2019/089945

(56) References cited:
- EP-A1- 2 843 637
- WO-A1-02/46856
- WO-A1-2007/054102
- WO-A1-2010/028938
- WO-A1-2017/069692
- WO-A2-01/13187
- WO-A2-02/061515
- US-A1- 2006 271 263
- US-A1- 2014 223 235
- US-B1- 6 285 925
- US-B1- 9 321 386

## Description

### FIELD

Disclosed embodiments relate to power machines that utilize joysticks or similar steering control devices for operating the machine.

### BACKGROUND

Power machines, such as tracked mini-loaders or other loaders are traditionally steered by an operator through the use of one or a pair of manipulable drive control levers or joysticks, which are electrically, mechanically, hydraulically, or otherwise coupled to one or more drive pumps. The one or more drive pumps are provided to control tractive effort to at least one of the axles on the machine. Manipulating the one or more joysticks controls both the speed and direction of the power machine. In addition to providing control of speed during forward travel, the joystick(s), in some instances can control reverse travel or turning of the power machine, or both. US2006271263 shows a power machine according to the preamble of claim 1. WO01/13187 discloses a method of controlling operation of a power machine according to the preamble of claim 7.

The discussion above is merely provided for general background information and is not intended to be used as an aid in determining the scope of the claimed subject matter.

### SUMMARY

A removable control module and a method for controlling a power machine are provided to allow wireless control of power machine functions.

According to the invention there is provided a power machine as defined in claim 1. The power machine includes a frame (210); a power system (104; 220) supported by the frame and configured to provide power for operating functions on the power machine; machine function components (340) supported by the frame and configured to perform machine functions using power from the power system; a machine controller (325) configured to control the application of power from the power system to the machine function components; an operator control system (260; 302) including a user input module (103; 303) configured to wirelessly communicate with the machine controller to communicate user input commands to the machine controller to control the machine function components and corresponding machine functions; and an operator proximity detection system (345) configured to detect whether the operator is in close proximity to the power machine, when the user input module is removed from the power machine to wirelessly communicate with the machine controller, and to provide an output indicative of operator proximity information. In exemplary embodiments, the machine controller is configured to control application of power from the power system to the machine function components partially as a function of the operator proximity information.

In some exemplary embodiments, the operator control system further comprises a mount (310) on which the user input module can be positioned. Also, in some embodiments, the user input module is configured such that when positioned on the mount the user input module communicates with the machine controller through a wired connection (330), and when the user input module has been removed from the mount the user input module communicates with the machine controller wirelessly through a wireless connection (315).

In some exemplary embodiments, the machine controller is configured to: determine (405) whether the user input module is positioned on the mount; operate (410) the power machine responsive to the user input commands from the user input module if the user input module is positioned on the mount; and if the user input module is not positioned on the mount, determine (415; 420) using the operator proximity detection system (345) whether the operator is proximate the power machine; prevent (425) operation of the power machine responsive to the user input commands from the user input module if the operator is determined to be proximate the power machine; determine (430), if the operator is determined to not be proximate the power machine, whether the operator and user input module are out of a predetermined range around the power machine; shut down (435) the power machine if it is determined that the operator and user input module are out of the predetermined range; and operate (440) the power machine responsive to the user input commands from the user input module if it is determined that the operator and user input module are within the predetermined range.

In some exemplary embodiments, the power machine further comprises a lift arm structure (230) pivotally coupled to the frame. In such embodiments, the machine function components (340) can include at least one lift arm actuator (238) coupled to the lift arm structure and configured to use power from the power system to selectively raise and lower the lift arm structure. Also, in some embodiments, the power machine further comprises a traction system (240) coupled to the frame and including at least one drive motor (125; 130) configured to use power from the power system to selectively propel the power machine over a support surface. The machine function components (340) can include the at least one drive motor.

In some exemplary embodiments, the user input module comprises a smart cellular phone configured with an app to communicate the user input commands to the machine controller. In other embodiments, the user input module comprises a mobile computing device configured with an app to communicate the user input commands to the machine controller.

According to the invention defined in claim 7 there is provided a method for controlling operation of a power machine with an operator control system (260; 302) including a user input module (103; 303) configured to wirelessly communicate with a machine controller (325) to communicate user input commands to the machine controller to control the machine function components and corresponding machine functions. The method includes the steps of:
determining (405), using the machine controller, whether the user input module is positioned on a mount (310) on the power machine; operating (410) the power machine, using the machine controller, responsive to the user input commands from the user input module if the user input module is positioned on the mount; determining (415; 420) using an operator proximity detection system (345) on the power machine whether the operator is proximate the power machine; preventing (425), using the machine controller, operation of the power machine responsive to the user input commands from the user input module if the operator is determined to be proximate the power machine; determining (430), if the operator is determined to not be proximate the power machine, whether the operator and user input module are out of a predetermined range around the power machine; shutting down (435) the power machine, using the machine controller, if it is determined that the operator and user input module are out of the predetermined range; and operating (440) the power machine, using the machine controller, responsive to the user input commands from the user input module if it is determined that the operator and user input module are within the predetermined range.

In some embodiments of the method, determining (400) whether the user input module is positioned on the mount further comprises determining whether the user input module is communicating with the machine controller wirelessly or through a wired connection.

In some embodiments of the method, determining (415; 420) using the operator proximity detection system (345) on the power machine whether the operator is proximate the power machine further comprises using at least one of radar circuitry, infrared detection circuitry, cameras and video or image processing circuitry, and RFID detection circuitry to detect an RFID tag located on the user input module.

In some embodiments of the method, preventing (425), using the machine controller, operation of the power machine responsive to the user input commands from the user input module if the operator is determined to be proximate the power machine further comprises locking out at least some machine functions.

In some embodiments of the method, preventing (425), using the machine controller, operation of the power machine responsive to the user input commands from the user input module if the operator is determined to be proximate the power machine further comprises turning off an engine of the power machine.

In some embodiments of the method, shutting down (435) the power machine, using the machine controller, if it is determined that the operator and user input module are out of the predetermined range further comprises turning off an engine of the power machine.

This Summary and the Abstract are provided to introduce a selection of concepts in a simplified form that are further described below in the Detailed Description.

### BRIEF DESCRIPTION OF THE DRAWINGS

FIG. 1 is a block diagram illustrating portions of a control system of the power machine upon which embodiments of the present disclosure can be advantageously practiced.
FIGs. 2-3 are perspective illustrations of a power machine upon which the embodiments of the present disclosure can be advantageously practiced.
FIG. 4 is a block diagram further illustrating an exemplary control system embodiment of a power machine.
FIG. 5 is a flow diagram illustrating a method of operating a power machine in accordance with an exemplary embodiment.

### DETAILED DESCRIPTION

Before any embodiments of the invention are explained in detail, it should be understood that the invention is not limited in its application to the details of construction and the arrangement of components set forth in the following description or illustrated in the following drawings. The invention is capable of other embodiments and of being practiced or of being carried out in various ways. Also, it should be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Disclosed embodiments provide a removable power machine controller and related features and methods which allow remote control of power machines such as loaders. For example, removable power machine controllers can be used with mini-loaders such as walk behind mini-loaders, ride on mini-loaders, or other types of loaders. The removable machine controller and related features can be used with other power machines as well for controlling power machine functions such as forward and reverse travel and speed, turning, lift arm movement, and attached implement functions.

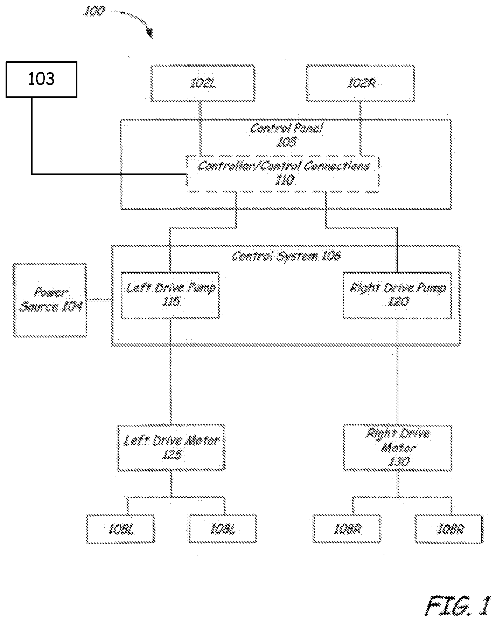

FIG. 1 is a schematic diagram of portions a power machine 100 upon which the embodiments disclosed below can be advantageously employed. Power machine 100 is representative of a number of different types of power machines including, but not necessarily limited to, walk behind loaders. Power machine 100 includes, in an exemplary embodiment, left and right joystick controllers or joystick input devices 102L and 102R located on a control panel 105, removable wireless user input module or controller 103 mountable on the control panel 105, a power source 104, a control system 106 including left drive pump 115 and right drive pump 120, a left drive motor 125 and a right drive motor 130, and left side tractive elements 108L and right side tractive elements 108R. In some embodiments, power machine 100 includes removable user input module 103, but does not include separate joystick input devices 102L and 102R. Further, in some embodiments, controller 103 need not be mountable on the control panel 105, but can instead be any device configured and capable of communicating with the power machine. For example, the controller 103 can be a smart phone or other mobile computing device with an app which configures the phone or device to communicate with a controller on the machine to perform machine control functions.

In some embodiments, power source 104 is an internal combustion engine, though other power sources can also be used, such as those using electricity or other sources of energy. Control system 106 is operably coupled to the power source 104, receives power from the power source 104, and converts the received power to signals that operate functional components of the power machine. In some embodiments, the control system 106 includes hydraulic components such as one or more hydraulic pumps (e.g., left and right drive pumps 115 and 120) that are configured to provide pressurized hydraulic fluid to various motors, actuators, and valve components that are illustratively employed to control the flow of hydraulic fluid to some or all of the motors and actuators used to control functional components of the power machine 100. Other types of control systems are contemplated. For example, the control system 106 can include electric generators or the like to generate electrical control signals to power electric actuators. For the sake of simplicity, the motors and actuators disclosed herein are referred to as hydraulic or electrohydraulic motors and actuators, but other types of motors and actuators can be employed in some embodiments.

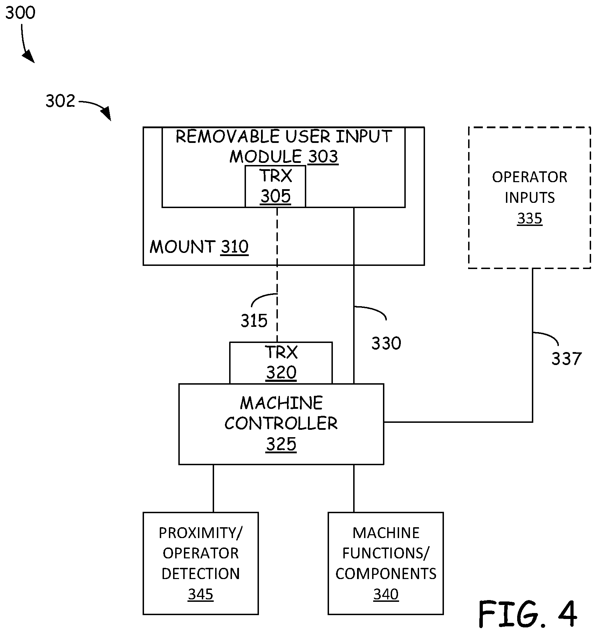

Left and right joystick operator inputs 102L and 102R can be located on a control panel 105 are operatively coupled to control connections 110 to provide inputs or input signals, indicative of the actuation of the inputs by an operator, to the control system 106 to control left and right drive pumps 115 and 120. Input module 103 is also, or alternatively, mounted on control panel and operatively coupled to control connections 110 to provide inputs or input signals, indicative of actuation of the wireless controller by an operator, to control system 106 and thus left and right drive pumps 115 and 120. Control connections for inputs 102L and 102R can include electrical, mechanical or other connections, a controller, or other devices. Input module 103 can further include a mount, wireless transceivers in the controller and on the power machine, and other components to facilitate either or both of on-machine and wireless control of the power machine. These and other features are illustrated in FIG. 4.

Left and right drive pumps 115 and 120 are illustratively variable displacement pumps that are in hydraulic communication with left drive motor 125 and right drive motor 130, respectively. Control connections 110 illustratively provide output signals to control the left and right drive pumps 115 and 120 to provide hydraulic fluid to the left and right drive motors 125 and 130 to cause the left and right drive motors to rotate in a clockwise or counterclockwise direction at a rate determined by the drive control operator input provided by removable module 103 and optional drive control operator inputs 102L and 102R. Left drive motor 125 is coupled to tractive elements 108L and right drive motor 130 is coupled to tractive elements 108R. Tractive elements 108L and 108R can be continuous tracks (with one or more such tracks on each side of the machine), pairs of wheels, or other forms of tractive elements. The left and right drive pumps 115 and 120 can be energized to cause the tractive elements 108L and 108R to act against each other by operating at different speeds and/or directions to accomplish steering by skidding.

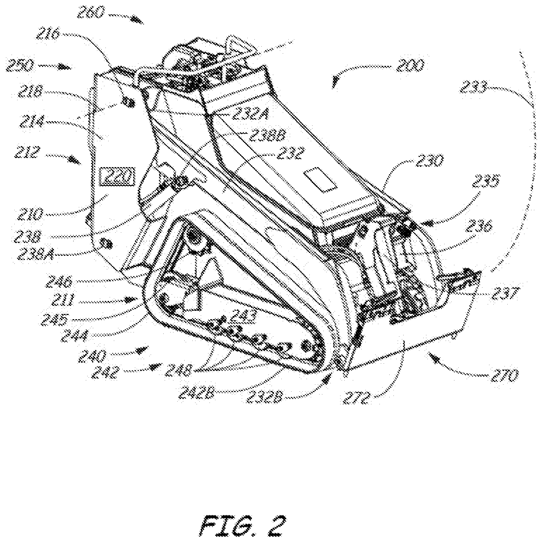

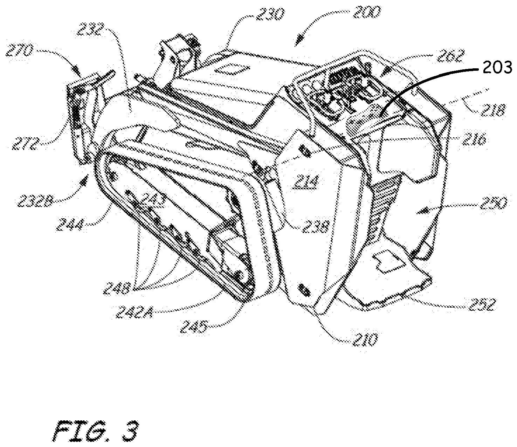

FIGs. 2-3 illustrates a loader 200, which is one particular example of a power machine of the type illustrated in FIG. 1 where the embodiments discussed below can be advantageously employed. Loader 200 is a tracked loader and more particularly, a mini-loader. A mini-loader for the purposes of this discussion is a small loader without an operator cab that can be operated from an operator station at the back of the loader. Some mini-loaders have a platform on which an operator can ride on. Other mini-loaders can be operated by an operator who walks behind the loader. Still other mini-loaders have a platform that is moveable or removable to allow an operator to alternatively ride on the platform or walk behind the loader. The loader 200 is a tracked loader, in some embodiments mini-loaders can be wheeled loaders as well.

Track loader 200 is one particular example of the power machine 100 illustrated broadly in FIG. 1 and discussed above. To that end, features of loader 200 described below include reference numbers that are generally similar to those used in FIG. 1. For example, loader 200 is described below as having a frame 210, just as power machine 100 has a frame 110. Track loader 200 is described herein to provide a reference for understanding one environment on which the embodiments described below related to operator controls may be practiced. The loader 200 should not be considered limiting especially as to features that loader 200 may have described herein that are not essential to the disclosed embodiments. Such features may or may not be included in power machines other than loader 200 upon which the embodiments disclosed below may be advantageously practiced. Unless specifically noted otherwise, embodiments disclosed below can be practiced on a variety of power machines, with the loader 200 being only one of those power machines. For example, some or all of the concepts discussed below can be practiced on many other types of work vehicles such as various other loaders, excavators, trenchers, and dozers, to name but a few examples.

As mentioned above, loader 200 includes frame 210. Frame 210 supports a power system 220, the power system being capable of generating or otherwise providing power for operating various functions on the power machine. Frame 210 also supports a work element in the form of a lift arm structure 230 that is selectively powered by the power system 220 in response to signals from an operator control system 260 and is capable of performing various work tasks. As loader 200 is a work vehicle, frame 210 also supports a traction system 240, which is also selectively powered by power system 220 in response to signals from operator control system 260. The traction system 240 is capable of propelling the power machine over a support surface. The lift arm structure 230 in turn supports an implement carrier 272, which is capable of receiving and securing various implements to the loader 200 for performing various work tasks. The loader 200 can be operated from an operator station 250 from which an operator can manipulate various control devices to cause the power machine to perform various functions, discussed in more detail below. Frame 210 also supports a work element in the form of a lift arm structure 230 that is powered by the power system 220 and is capable of performing various work tasks.

Various power machines that are capable of including and/or interacting with the embodiments discussed below can have various different frame components that support various work elements. The elements of frame 210 discussed herein are provided for illustrative purposes and should not be considered to be the only type of frame that a power machine on which the embodiments can be practiced can employ. Frame 210 of loader 200 includes an undercarriage or lower portion 211 of the frame and a mainframe or upper portion 212 of the frame that is supported by the undercarriage. The mainframe 212 of loader 200 is attached to the undercarriage 211 such as with fasteners or by welding the undercarriage to the mainframe. Mainframe 212 includes a pair of upright portions 214 located on either side and toward the rear of the mainframe that support a lift arm structure 230 and to which the lift arm structure 230 is pivotally attached. The lift arm structure 230 is illustratively pinned to each of the upright portions 214. The combination of mounting features on the upright portions 214 and the lift arm structure 230 and mounting hardware (including pins used to pin the lift arm structure to the mainframe 212) are collectively referred to as joints 216 (one is located on each of the upright portions 214) for the purposes of this discussion. Joints 216 are aligned along an axis 218 so that the lift arm structure is capable of pivoting, as discussed below, with respect to the frame 210 about axis 218. Other power machines may not include upright portions on either side of the frame, or may not have a lift arm structure that is mountable to upright portions on either side and toward the rear of the frame. For example, some power machines may have a single arm, mounted to a single side of the power machine or to a front or rear end of the power machine. Other machines can have a plurality of work elements, including a plurality of lift arms, each of which is mounted to the machine in its own configuration. Frame 210 also supports a pair of tractive elements 242 on either side of the loader 200, which on loader 200 are track assemblies.

The lift arm structure 230 shown in FIGs. 2-3 is one example of many different types of lift arm structures that can be attached to a power machine such as loader 200 or other power machines on which embodiments of the present discussion can be practiced. The lift arm structure 230 has a pair of lift arms 232 that are disposed on opposing sides of the frame 210. A first end 232A of each of the lift arms 232 is pivotally coupled to the power machine at joints 216 and a second end 232B of each of the lift arms is positioned forward of the frame 210 when in a lowered position as shown in FIG. 2. The lift arm structure 230 is moveable (i.e. the lift arm structure can be raised and lowered) under control of the loader 200 with respect to the frame 210. That movement (i.e. the raising and lowering of the lift arm structure 230) is described by a radial travel path, shown generally by arrow 233. For the purposes of this discussion, the travel path 233 of the lift arm structure 230 is defined by the path of movement of the second end 232B of the lift arm structure.

The lift arms 232 are each coupled to a cross member 236 that provides increased structural stability to the lift arm structure 230. A pair of actuators 238, which on loader 200 are hydraulic cylinders configured to selectively receive pressurized fluid from power system 220, are pivotally coupled to both the frame 210 and the lift arms 234 at pivotable joints 238A and 238B, respectively, on either side of the loader 200. The actuators 238 are sometimes referred to individually and collectively as lift cylinders. Actuation (i.e., extension and retraction) of the actuators 238 cause the lift arm structure 230 to pivot about joints 216 and thereby be raised and lowered along a fixed path illustrated by arrow 233. The lift arm structure 230 shown in FIGs. 2-3 is representative of one type of lift arm structure that may be coupled to the power machine 200. Other lift arm structures, with different geometries, components, and arrangements can be pivotally coupled to the loader 200 or other power machines upon which the embodiments discussed herein can be practiced without departing from the scope of the present discussion. For example, other machines can have lift arm structures with lift arms that each has two portions (as opposed to the single piece lift arms 232) that are pivotally coupled to each other along with a control arm to create a four-bar linkage and a substantially vertical travel path or at least more vertical than the radial path of lift arm structure 230. Other lift arm structures can have an extendable or telescoping lift arm. Still other lift arm structures can have several (i.e. more than two) portions segments or portions. Some lift arms, most notably lift arms on excavators but also possible on loaders, may have portions that are controllable to pivot with respect to another segment instead of moving in concert (i.e. along a pre-determined path) as is the case in the lift arm structure 230 shown in FIGs. 2-3. Some power machines have lift arm structures with a single lift arm, such as is known in excavators or even some loaders and other power machines. Other power machines can have a plurality of lift arm structures, each being independent of the other(s).

An exemplary implement interface 270 is provided at a second end 234B of the arm 234. The implement interface 270 includes an implement carrier 272 that is capable of accepting and securing a variety of different implements to the lift arm 230. Such implements have a machine interface that is configured to be engaged with the implement carrier 272. The implement carrier 272 is pivotally mounted to the second end 232B of each of the arms 232. An implement carrier actuator 237 is operably coupled the lift arm structure 230 and the implement carrier 272 and are operable to rotate the implement carrier with respect to the lift arm structure. Other examples of power machines can have a plurality of implement carrier actuators. Still other examples of power machines of the type that can advantageously employ the disclosed embodiments discussed herein may not have an implement carrier that is capable of accepting and securing a variety of different attachments, but instead may allow only for implements to be directly attached to its lift arm structure.

The implement interface 270 also includes an implement power source 235 available for connection to an implement on the lift arm structure 230. The implement power source 235 includes pressurized hydraulic fluid ports to which an implement can be coupled. The pressurized hydraulic fluid port selectively provides pressurized hydraulic fluid for powering one or more functions or actuators on an implement. The implement power source can, but need not, include an electrical power source for powering electrical actuators and/or an electronic controller on an implement. The electrical power source can also include electrical conduits that are in communication with a data bus on the loader 200 to allow communication between a controller on an implement and electronic devices on the loader 200. It should be noted that the specific implement power source on loader 200 does not include an electrical power source.

The lower frame 211 supports and has attached to it a pair of tractive elements, identified in FIGs. 2-3 as left track assembly 242A and right track assembly 242B (collectively tractive elements 242). Each of the tractive elements 242 has a track frame 243 that is coupled to the frame 210. The track frame 243 supports and is surrounded by an endless track 244, which rotates under power to propel the loader 200 over a support surface. Various elements are coupled to or otherwise supported by the track frame 243 for engaging and supporting the endless track 244 and cause it to rotate about the track frame. For example, a sprocket 246 is supported by the track frame 243 and engages the endless track 244 to cause the endless track to rotate about the track frame. An idler 245 is held against the track 244 by a tensioner (not shown) to maintain proper tension on the track. The track frame 243 also supports a plurality of rollers 248, which engage the track and, through the track, the support surface to support and distribute the weight of the loader 200.

An operator station 250 is positioned toward the rear of the frame 210. A platform 252 is provided for the operator to stand. While standing on the platform 252, and operator has access to a plurality of operator control inputs 262 that, when manipulated by the operator, can provide control signals to control work functions of the power machine 200, including, for example, the traction system 240 and the lift arm 230. Operator control inputs 262 can include joysticks with adjacent reference bars of the type discussed below. In exemplary embodiments, operator control inputs include removable wireless controller or input module 203 mountable on the control panel and configured to be removable from power machine 200 to provide wireless control of power machine functions. However, as was the case with controller 103, input module 203 need not be mountable on the control panel in all embodiments, but can instead be any device configured and capable of communicating with the power machine. For example, the input module 203 can be a smart phone or other mobile computing device with an app which configures the phone or device to communicate with a controller on the machine to perform machine control functions.

Display devices can be provided that are viewable from the operator station to give indications of information relatable to the operation of the power machines in a form that can be sensed by an operator, such as, for example audible and/or visual indications. Audible indications can be made in the form of buzzers, bells, and the like or via verbal communication. Visual indications can be made in the form of graphs, lights, icons, gauges, alphanumeric characters, and the like. Displays can be dedicated to provide dedicated indications, such as warning lights or gauges, or dynamic to provide programmable information, including programmable display devices such as monitors of various sizes and capabilities. Display devices can provide diagnostic information, troubleshooting information, instructional information, and various other types of information that assists an operator with operation of the power machine or an implement coupled to the power machine. Other information that may be useful for an operator can also be provided.

The description of power machine 100 and loader 200 above is provided for illustrative purposes, to provide illustrative environments on which the embodiments discussed below can be practiced. While the embodiments discussed can be practiced on a power machine such as is generally described by the power machine 100 shown in the block diagram of FIG. 1 and more particularly on a loader such as loader 200, unless otherwise noted or recited, the concepts discussed below are not intended to be limited in their application to the environments specifically described above.

Referring now to FIG. 4, shown are portions of a power machine 300 having a control system 302 including a removable user input module 303 in accordance with exemplary embodiments. Power machine 300 can be similar to, or the same as, power machines 100 and 200 discussed above. User input module 303 is configured to communicate user input commands to a machine controller 325 to control machine functions 340 such as some or all of drive functions, lift functions, tilt functions, auxiliary functions and engine start/stop functions. When removed from a mount 310, user input module 303 is configured to communicate through a wireless connection 315 between transceiver circuitry (or alternatively just transmitter circuitry) 305 on the user input module and transceiver circuitry (or alternately just receiver circuitry) 320 that is operably coupled to the machine controller 325 on the power machine. In some embodiments, when not removed from mount 310, user input module can be configured to communicate with machine controller 325 through an optional wired connection 330, a connection that is made, for example, by mounting the user input module 303 on mount 310. Also, power machine 400 can, but need not, include further non-removable operator input devices 335 such as joystick controllers, levers, push buttons, touch screens, etc. connected to machine controller 325 through a wired or wireless connection 337. Also, while user input module 303 is described as being mountable on mount 310, this need not be the case in all embodiments. Again, user input module 303 can instead be any device configured and capable of communicating with the power machine. For example, the controller 303 can be a smart phone or other mobile computing device with an app which configures the phone or device to communicate with a controller on the machine to perform machine control functions.

In some exemplary embodiments, machine mount 310 can include circuitry and components configured to detect or sense whether the user input module 303 has been removed so that control of machine functions can be adjusted to accommodate remote control. To this end, power machine 300 includes, in some exemplary embodiments, operator proximity detection system 345 configured to detect whether the operator is in close proximity to the power machine or certain portions of the power machine when the user input module 303 is removed from mount 310, whether. Operator proximity detection system 345 can utilize radar circuitry, infrared detection circuitry, cameras and video or image processing circuitry, RFID detection circuitry to detect an RFID tag located on the user input module, or other technologies to detect the presence of the operator near the power machine. Using this information, machine controller 325 can control the power machine accordingly to minimize or reduce the likelihood that the operator would be injured by the power machine. For instance, when the operator is detected to be in close proximity to the power machine, some or all of the machine functions can be locked and/or the engine can be turned off.

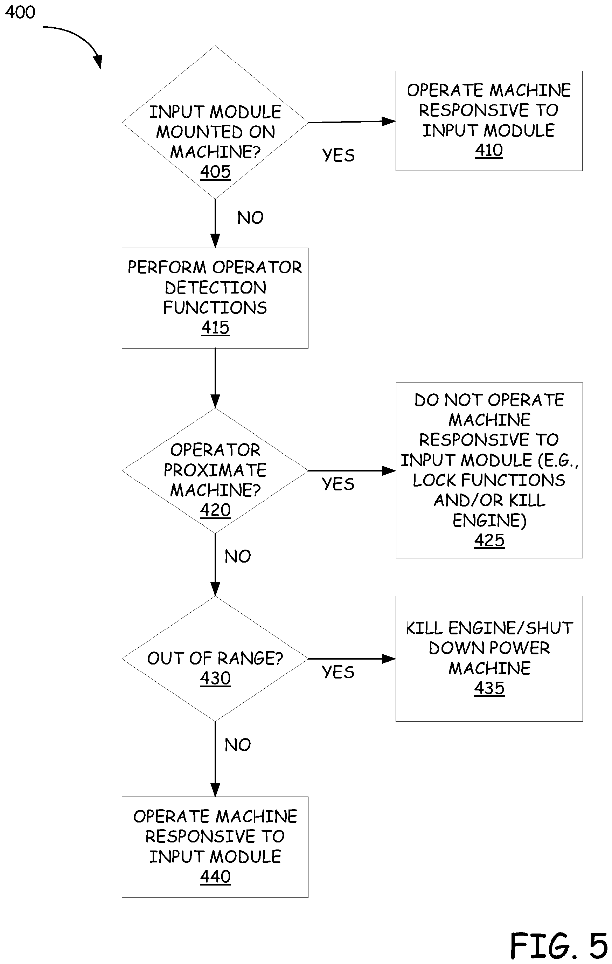

Referring now to the flow diagram of FIG. 5, shown is a method 400 of controlling operation of a power machine with a removable user input module. As shown at decision block 405, a determination is made as to whether the input module is mounted on the power machine. If the input module is mounted on the power machine, at operation 410 the power machine can be operated responsive to operator commands from the input module.

If at decision block 405 it is determined that the input module is not mounted on the power machine, operator detection functions are performed at process block 415 to determine at decision 420 whether the operator is in close proximity to the power machine. If the operator is determined to be in close proximity to the power machine, at process block 425 the power machine is controlled to lock out some or all functions, to kill the engine of the power machine, or to otherwise prevent operation of the power machine responsive to inputs from the input module.

If at decision block 420 it is determined that the operator is not proximate the power machine, at decision block 430 it is determined whether the operator and input module are outside of some predetermined range of or distance from the power machine. The operator's presence within the predetermined range can be established using any suitable technology. For example, a radar system can be utilized to identify the position and distance of the operator and user input module from the machine. As another alternative, the predetermined range can be established using a Bluetooth Low Energy (BLE) communication connection between the user input module and the power machine. The predetermined range can then be set as the maximum operable distance of the BLE technology (e.g., 100 meters). Other technologies can be used to determine whether the operator and user input module are within a predetermined range. If the operator and input module are outside of the predetermined range, the power machine can be automatically shut down at process block 435. If the operator and input module are within the predetermined range of, but not proximate to, the power machine, then at process block 440 the power machine is operated responsive to the operator commands made through the input module.

Although the subject matter has been described in language specific to structural features and/or methodological acts, it should be understood that the subject matter defined in the appended claims is not necessarily limited to the specific features or acts described above. Rather, the specific features and acts described above are disclosed as example forms of implementing the claims. For example, in various embodiments, different types of power machines can include removable wireless controllers having one or more of the disclosed concepts. Other examples of modifications of the disclosed concepts are also possible, without departing from the scope of the appended claims.

## Claims

1. A power machine comprising:
a frame (210);
a power system (104; 220) supported by the frame and configured to provide power for operating functions on the power machine;
machine function components (340) supported by the frame and configured to perform machine functions using power from the power system;
a machine controller (325) configured to control the application of power from the power system to the machine function components;
an operator control system (260; 302) including a user input module (103; 303) configured to wirelessly communicate with the machine controller to communicate user input commands to the machine controller to control the machine function components and corresponding machine functions, **characterised by** the operator control system further comprising
a mount (310) on which the user input module can be positioned on the power machine, wherein the user input module is configured such that when positioned on the mount on the power machine the user input module communicates with the machine controller through a wired connection (330), and when the user input module has been removed from the mount the user input module communicates with the machine controller wirelessly through a wireless connection (315); and
an operator proximity detection system (345) configured to detect whether the operator is in close proximity to the power machine, when the user input module is removed from the power machine to wirelessly communicate with the machine controller, and to provide an output indicative of operator proximity information;
wherein the machine controller is configured to control application of power from the power system to the machine function components partially as a function of the operator proximity information, the machine controller further configured to:
determine (405) whether the user input module is positioned on the mount;
operate (410) the power machine, using the machine controller, responsive to the user input commands from the user input module if the user input module is positioned on the mount;
if the user input module is not positioned on the mount, determine (415; 420) using the operator proximity detection system (345) whether the operator is proximate the power machine;
prevent (425) operation of the power machine responsive to the user input commands from the user input module if the operator is determined to be proximate the power machine.

2. The power machine of claim 1, wherein the machine controller is further configured, when the user input module is not positioned on the mount, to:
determine (430), if the operator is determined to not be proximate the power machine, whether the operator and user input module are out of a predetermined range around the power machine;
shut down (435) the power machine if it is determined that the operator and user input module are out of the predetermined range; and
operate (440) the power machine responsive to the user input commands from the user input module if it is determined that the operator and user input module are within the predetermined range.

3. The power machine of claim 1, and further comprising a lift arm structure (230) pivotally coupled to the frame, the machine function components (340) including at least one lift arm actuator (238) coupled to the lift arm structure and configured to use power from the power system to selectively raise and lower the lift arm structure.

4. The power machine of claim 1, and further comprising a traction system (240) coupled to the frame and including at least one drive motor (125; 130) configured to use power from the power system to selectively propel the power machine over a support surface, the machine function components (340) including the at least one drive motor.

5. The power machine of claim 1, wherein the user input module comprises a smart cellular phone configured with an app to communicate the user input commands to the machine controller.

6. The power machine of claim 1, wherein the user input module comprises a mobile computing device configured with an app to communicate the user input commands to the machine controller.

7. A method (400) of controlling operation of a power machine with an operator control system (260; 302) including a user input module (103; 303) configured to wirelessly communicate with a machine controller (325) to communicate user input commands to the machine controller to control machine function components and corresponding machine functions, the method **characterised by** the steps of:
determining (405), using the machine controller, whether the user input module is positioned on a mount (310) on the power machine;
operating (410) the power machine, using the machine controller, responsive to the user input commands from the user input module if the user input module is positioned on the mount;
determining, if the user input module is not positioned on the mount, (415; 420) using an operator proximity detection system (345) on the power machine whether the operator is proximate the power machine and preventing (425), using the machine controller, operation of the power machine responsive to the user input commands from the user input module if the operator is determined to be proximate the power machine;
determining (430), if the operator is determined to not be proximate the power machine, whether the operator and user input module are out of a predetermined range around the power machine;
shutting down (435) the power machine, using the machine controller, if it is determined that the operator and user input module are out of the predetermined range; and
operating (440) the power machine, using the machine controller, responsive to the user input commands from the user input module if it is determined that the operator and user input module are within the predetermined range.

8. The method of claim 7, wherein determining (400) whether the user input module is positioned on the mount further comprises determining whether the user input module is communicating with the machine controller wirelessly or through a wired connection.

9. The method of claim 7, wherein determining (415; 420), using the operator proximity detection system (345) on the power machine, whether the operator is proximate the power machine further comprises using at least one of radar circuitry, infrared detection circuitry, cameras and video or image processing circuitry, and RFID detection circuitry to detect an RFID tag located on the user input module.

10. The method of claim 7, wherein preventing (425), using the machine controller, operation of the power machine responsive to the user input commands from the user input module if the operator is determined to be proximate the power machine further comprises locking out at least some machine functions.

11. The method of claim 7, wherein preventing (425), using the machine controller, operation of the power machine responsive to the user input commands from the user input module if the operator is determined to be proximate the power machine further comprises turning off an engine of the power machine.

12. The method of claim 7, wherein shutting down (435) the power machine, using the machine controller, if it is determined that the operator and user input module are out of the predetermined range further comprises turning off an engine of the power machine.

## Patentansprüche

1. Kraftmaschine, aufweisend:
einen Rahmen (210);
ein Kraftsystem (104; 220), das von dem Rahmen getragen wird und zum Bereitstellen von Energie für Betriebsfunktionen an der Kraftmaschine konfiguriert ist;
Maschinenfunktionsbauteile (340), die von dem Rahmen getragen werden und zum Durchführen von Maschinenfunktionen unter Verwendung von Energie aus dem Kraftsystem konfiguriert sind;
eine Maschinensteuerung (325), die zum Steuern der Beaufschlagung mit Energie aus dem Kraftsystem auf die Maschinenfunktionsbauteile konfiguriert ist;
ein Bedienersteuerungssystem (260; 302), das ein Nutzereingabemodul (103; 303) aufweist, das zur Drahtloskommunikation mit der Maschinensteuerung konfiguriert ist, um Nutzereingabebefehle an die Maschinensteuerung zu übermitteln, um die Maschinenfunktionsbauteile und entsprechende Maschinenfunktionen zu steuern, **dadurch gekennzeichnet, dass** das Bedienersteuerungssystem ferner aufweist:
eine Halterung (310), auf der das Nutzereingabemodul an der Kraftmaschine positioniert werden kann, wobei das Nutzereingabemodul so konfiguriert ist, dass das Nutzereingabemodul, wenn es auf der Halterung an der Kraftmaschine positioniert ist, durch eine drahtgebundene Verbindung (330) mit der Maschinensteuerung kommuniziert, und das Nutzereingabemodul, wenn das Nutzereingabemodul aus der Halterung entnommen wurde, durch eine Drahtlosverbindung (315) drahtlos mit der Maschinensteuerung kommuniziert; und
ein Bedienernähedetektionssystem (345), das konfiguriert ist, zu detektieren, ob der Bediener in unmittelbarer Nähe der Kraftmaschine ist, wenn das Nutzereingabemodul von der Kraftmaschine entfernt wird, um drahtlos mit der Maschinensteuerung zu kommunizieren, und um eine für Bedienernäheinformationen indikative Ausgabe bereitzustellen;
wobei die Maschinensteuerung zum Steuern der Beaufschlagung mit Energie aus dem Kraftsystem auf die Maschinenfunktionsbauteile teilweise als Funktion der Bedienernäheinformationen konfiguriert ist, wobei die Maschinensteuerung ferner konfiguriert ist zum:
Bestimmen (405), ob das Nutzereingabemodul auf der Halterung positioniert ist;
Betreiben (410) der Kraftmaschine unter Verwendung der Maschinensteuerung, in Reaktion auf die Nutzereingabebefehle von dem Nutzereingabemodul, wenn das Nutzereingabemodul auf der Halterung positioniert ist;
wenn das Nutzereingabemodul nicht auf der Halterung positioniert ist, Bestimmen (415, 420) unter Verwendung des Bedienernähedetektionssystems (345), ob sich der Bediener in der Nähe der Kraftmaschine befindet;
Verhindern (425) des Betriebs der Kraftmaschine, auf die Nutzereingabebefehle von dem Nutzereingabemodul ansprechend, wenn bestimmt wird, dass sich der Bediener in der Nähe der Kraftmaschine befindet.

2. Kraftmaschine nach Anspruch 1, wobei die Maschinensteuerung ferner, wenn das Nutzereingabemodul nicht auf der Halterung positioniert ist, konfiguriert ist zum:
Bestimmen (430), wenn bestimmt wird, dass sich der Bediener nicht in der Nähe der Kraftmaschine befindet, ob der Bediener und das Nutzereingabemodul sich außerhalb eines vorgegebenen Bereichs um die Kraftmaschine befinden;
Abschalten (435) der Kraftmaschine, wenn bestimmt wird, dass sich der Bediener und das Nutzereingabemodul außerhalb des vorgegebenen Bereichs befinden; und
Bedienen (440) der Kraftmaschine, auf die Nutzereingabebefehle von dem Nutzereingabemodul ansprechend, wenn bestimmt wird, dass sich der Bediener und das Nutzereingabemodul innerhalb des vorgegebenen Bereichs befinden.

3. Kraftmaschine nach Anspruch 1, ferner aufweisend eine Hubarmkonstruktion (230), die schwenkbar an den Rahmen gekoppelt ist, wobei die Maschinenfunktionsbauteile (340) mindestens einen Hubarmaktuator (238) aufweisen, der an die Hubarmkonstruktion gekoppelt ist und zur Verwendung von Kraft aus dem Kraftsystem zum selektiven Heben und Senken der Hubarmkonstruktion konfiguriert ist.

4. Kraftmaschine nach Anspruch 1, ferner aufweisend ein Traktionssystem (240), das an den Rahmen gekoppelt ist und mindestens einen Antriebsmotor (125; 130) aufweist, der zur Verwendung von Energie aus dem Kraftsystem zum selektiven Antreiben der Kraftmaschine über eine Stützfläche konfiguriert ist, wobei die Maschinenfunktionsbauteile (340) den mindestens einen Antriebsmotor aufweisen.

5. Kraftmaschine nach Anspruch 1, wobei das Nutzereingabemodul ein Smartphone aufweist, das mit einer App zum Übermitteln der Nutzereingabebefehle an die Maschinensteuerung konfiguriert ist.

6. Kraftmaschine nach Anspruch 1, wobei das Nutzereingabemodul eine mobile Rechenvorrichtung aufweist, die mit einer App zum Übermitteln der Nutzereingabebefehle an die Maschinensteuerung konfiguriert ist.

7. Verfahren (400) zum Steuern des Betriebs einer Kraftmaschine mit einem Bedienersteuerungssystem (260; 302), das ein Nutzereingabemodul (103; 303) aufweist, das zur Drahtloskommunikation mit einer Maschinensteuerung (325) konfiguriert ist, um Nutzereingabebefehle an die Maschinensteuerung zu übermitteln, um Maschinenfunktionsbauteile und entsprechende Maschinenfunktionen zu steuern, wobei das Verfahren **gekennzeichnet ist durch** die Schritte:
Bestimmen (405) unter Verwendung der Maschinensteuerung, ob das Nutzereingabemodul auf einer Halterung (310) an der Kraftmaschine positioniert ist;
Betreiben (410) der Kraftmaschine unter Verwendung der Maschinensteuerung, in Reaktion auf die Nutzereingabebefehle aus dem Nutzereingabemodul, wenn das Nutzereingabemodul auf der Halterung positioniert ist;
Bestimmen, wenn das Nutzereingabemodul nicht auf der Halterung positioniert ist, (415, 420) unter Verwendung eines Bedienernähedetektionssystems (345) an der Kraftmaschine, ob sich der Bediener in der Nähe der Kraftmaschine befindet, und Verhindern (425), unter Verwendung der Maschinensteuerung, des Betriebs der Kraftmaschine, auf die Nutzereingabebefehle von dem Nutzereingabemodul ansprechend, wenn bestimmt wird, dass sich der Bediener in der Nähe der Kraftmaschine befindet;
Bestimmen (430), wenn bestimmt wird, dass sich der Bediener nicht in der Nähe der Kraftmaschine befindet, ob der Bediener und das Nutzereingabemodul sich außerhalb eines vorgegebenen Bereichs um die Kraftmaschine befinden;
Abschalten (435) der Kraftmaschine unter Verwendung der Maschinensteuerung, wenn bestimmt wird, dass sich der Bediener und das Nutzereingabemodul außerhalb des vorgegebenen Bereichs befinden; und
Betreiben (440) der Kraftmaschine unter Verwendung der Maschinensteuerung, in Reaktion auf die Nutzereingabebefehle aus dem Nutzereingabemodul, wenn bestimmt wird, dass sich der Bediener und das Nutzereingabemodul innerhalb des vorgegebenen Bereichs befinden.

8. Verfahren nach Anspruch 7, wobei das Bestimmen (400), ob das Nutzereingabemodul auf der Halterung positioniert ist, ferner das Bestimmen aufweist, ob das Nutzereingabemodul drahtlos oder durch eine drahtgebundene Verbindung mit der Maschinensteuerung kommuniziert.

9. Verfahren nach Anspruch 7, wobei das Bestimmen (415, 420) unter Verwendung des Bedienernähedetektionssystems (345) an der Kraftmaschine, ob sich der Bediener in der Nähe der Kraftmaschine befindet, ferner das Verwenden von mindestens einer von einer Radarschaltung, Infrarotdetektionsschaltung, Kamera- und Video- oder Bildverarbeitungsschaltung und RFID-Detektionsschaltung zum Detektieren eines an dem Nutzereingabemodul befindlichen RFID-Transponders umfasst.

10. Verfahren nach Anspruch 7, wobei das Verhindern (425), unter Verwendung der Maschinensteuerung, des Betriebs der Kraftmaschine, in Reaktion auf die Nutzereingabebefehle aus dem Nutzereingabemodul, wenn bestimmt wird, dass sich der Bediener in der Nähe der Kraftmaschine befindet, ferner das Sperren von zumindest manchen der Maschinenfunktionen umfasst.

11. Verfahren nach Anspruch 7, wobei das Verhindern (425), unter Verwendung der Maschinensteuerung, des Betriebs der Kraftmaschine, in Reaktion auf die Nutzereingabebefehle aus dem Nutzereingabemodul, wenn bestimmt wird, dass sich der Bediener in der Nähe der Kraftmaschine befindet, ferner das Ausschalten eines Motors der Kraftmaschine aufweist.

12. Verfahren nach Anspruch 7, wobei das Abschalten (435) der Kraftmaschine unter Verwendung der Maschinensteuerung, wenn bestimmt wird, dass sich der Bediener und das Nutzereingabemodul außerhalb des vorgegebenen Bereichs befinden, ferner das Ausschalten eines Motors der Kraftmaschine aufweist.

## Revendications

1. Machine à force motrice comprenant :
un cadre (210) ;
un système d'alimentation (104 ; 220) supporté par le cadre et configuré pour fournir de l'énergie pour faire fonctionner des fonctions sur la machine à force motrice ;
des composants de fonction de machine (340) supportés par le cadre et configurés pour réaliser des fonctions de machine en utilisant l'énergie provenant du système d'alimentation ;
un contrôleur de machine (325) configuré pour commander l'application de l'énergie provenant du système d'alimentation aux composants de fonction de machine ;
un système de commande de l'opérateur (260 ; 302) incluant un module d'entrée utilisateur (103 ; 303) configuré pour communiquer sans fil avec le contrôleur de machine afin de communiquer des commandes d'entrée utilisateur au contrôleur de machine pour commander les composants de fonction de machine et des fonctions de machine correspondantes, **caractérisé en ce que** le système de commande de l'opérateur comprend en outre
une monture (310) sur laquelle le module d'entrée utilisateur peut être positionné sur la machine à force motrice, dans laquelle le module d'entrée utilisateur est configuré de telle sorte que lorsqu'il est positionné sur la monture sur la machine à force motrice, le module d'entrée utilisateur communique avec le contrôleur de machine par le biais d'une connexion câblée (330), et lorsque le module d'entrée utilisateur a été retiré de la monture, le module d'entrée utilisateur communique avec le contrôleur de machine sans fil par le biais d'une connexion sans fil (315) ; et
un système de détection de proximité de l'opérateur (345) configuré pour détecter si l'opérateur est à proximité de la machine à force motrice, lorsque le module d'entrée utilisateur est retiré de la machine à force motrice pour communiquer sans fil avec le contrôleur de machine, et pour fournir une sortie indiquant des informations de proximité de l'opérateur ;
dans laquelle le contrôleur de machine est configuré pour commander l'application de l'énergie provenant du système d'alimentation aux composants de fonction de machine partiellement en fonction des informations de proximité de l'opérateur, le contrôleur de machine étant en outre configuré pour :
déterminer (405) si le module d'entrée utilisateur est positionné sur la monture ;
faire fonctionner (410) la machine à force motrice, en utilisant le contrôleur de machine, en réponse aux commandes d'entrée utilisateur provenant du module d'entrée utilisateur si le module d'entrée utilisateur est positionné sur la monture ;
si le module d'entrée utilisateur n'est pas positionné sur la monture, déterminer (415 ; 420) en utilisant le système de détection de proximité de l'opérateur (345) si l'opérateur est à proximité de la machine à force motrice ;
empêcher (425) le fonctionnement de la machine à force motrice en réponse aux commandes d'entrée utilisateur provenant du module d'entrée utilisateur si l'opérateur est déterminé comme étant à proximité de la machine à force motrice.

2. Machine à force motrice selon la revendication 1, dans laquelle le contrôleur de machine est en outre configuré, lorsque le module d'entrée utilisateur n'est pas positionné sur la monture, pour :
déterminer (430), si l'opérateur est déterminé comme n'étant pas à proximité de la machine à force motrice, si l'opérateur et le module d'entrée utilisateur sont hors d'une plage prédéterminée autour de la machine à force motrice ;
arrêter (435) la machine à force motrice s'il est déterminé que l'opérateur et le module d'entrée utilisateur sont hors de la plage prédéterminée ; et
faire fonctionner (440) la machine à force motrice en réponse aux commandes d'entrée utilisateur provenant du module d'entrée utilisateur s'il est déterminé que l'opérateur et le module d'entrée utilisateur sont dans la plage prédéterminée.

3. Machine à force motrice selon la revendication 1, et comprenant en outre une structure de bras de levage (230) couplée de manière pivotante au cadre, les composants de fonction de machine (340) incluant au moins un actionneur de bras de levage (238) couplé à la structure de bras de levage et configuré pour utiliser l'énergie provenant du système d'alimentation pour lever et abaisser sélectivement la structure de bras de levage.

4. Machine à force motrice selon la revendication 1, et comprenant en outre un système de traction (240) couplé au cadre et incluant au moins un moteur d'entraînement (125 ; 130) configuré pour utiliser l'énergie provenant du système d'alimentation pour propulser sélectivement la machine à force motrice sur une surface de support, les composants de fonction de machine (340) incluant l'au moins un moteur d'entraînement.

5. Machine à force motrice selon la revendication 1, dans laquelle le module d'entrée utilisateur comprend un téléphone cellulaire intelligent configuré avec une application pour communiquer les commandes d'entrée utilisateur au contrôleur de machine.

6. Machine à force motrice selon la revendication 1, dans laquelle le module d'entrée utilisateur comprend un dispositif informatique mobile configuré avec une application pour communiquer les commandes d'entrée utilisateur au contrôleur de machine.

7. Procédé (400) de commande du fonctionnement d'une machine à force motrice comprenant un système de commande de l'opérateur (260 ; 302) incluant un module d'entrée utilisateur (103 ; 303) configuré pour communiquer sans fil avec un contrôleur de machine (325) pour communiquer des commandes d'entrée utilisateur au contrôleur de machine afin de commander des composants de fonction de machine et des fonctions de machine correspondantes, le procédé étant **caractérisé par** les étapes de :
déterminer (405), en utilisant le contrôleur de machine, si le module d'entrée utilisateur est positionné sur une monture (310) sur la machine à force motrice ;
faire fonctionner (410) la machine à force motrice, en utilisant le contrôleur de machine, en réponse aux commandes d'entrée utilisateur provenant du module d'entrée utilisateur si le module d'entrée utilisateur est positionné sur la monture ;
déterminer, si le module d'entrée utilisateur n'est pas positionné sur la monture (415 ; 420) en utilisant un système de détection de proximité de l'opérateur (345) sur la machine à force motrice, si l'opérateur est à proximité de la machine à force motrice et empêcher (425), en utilisant le contrôleur de machine, le fonctionnement de la machine à force motrice en réponse aux commandes d'entrée utilisateur provenant du module d'entrée utilisateur si l'opérateur est déterminé comme étant à proximité de la machine à force motrice ;
déterminer (430), si l'opérateur est déterminé comme n'étant pas à proximité de la machine à force motrice, si l'opérateur et le module d'entrée utilisateur sont hors d'une plage prédéterminée autour de la machine à force motrice ;
arrêter (435) la machine à force motrice, en utilisant le contrôleur de machine, s'il est déterminé que l'opérateur et le module d'entrée utilisateur sont hors de la plage prédéterminée ; et
faire fonctionner (440) la machine à force motrice, en utilisant le contrôleur de machine, en réponse aux commandes d'entrée utilisateur provenant du module d'entrée utilisateur, s'il est déterminé que l'opérateur et le module d'entrée utilisateur sont dans la plage prédéterminée.

8. Procédé selon la revendication 7, dans lequel le fait de déterminer (400) si le module d'entrée utilisateur est positionné sur la monture comprend en outre le fait de déterminer si le module d'entrée utilisateur communique avec le contrôleur de machine sans fil ou par le biais d'une connexion câblée.

9. Procédé selon la revendication 7, dans lequel le fait de déterminer (415 ; 420), en utilisant le système de détection de proximité de l'opérateur (345) sur la machine à force motrice, si l'opérateur est à proximité de la machine à force motrice comprend en outre le fait d'utiliser au moins l'un parmi un circuit radar, un circuit de détection infrarouge, des caméras et un circuit de traitement de vidéo ou d'image, et un circuit de détection RFID pour détecter une étiquette RFID située sur le module d'entrée utilisateur.

10. Procédé selon la revendication 7, dans lequel le fait d'empêcher (425), en utilisant le contrôleur de machine, le fonctionnement de la machine à force motrice en réponse aux commandes d'entrée utilisateur provenant du module d'entrée utilisateur si l'opérateur est déterminé comme étant à proximité de la machine à force motrice comprend en outre le fait de verrouiller au moins certaines fonctions de machine.

11. Procédé selon la revendication 7, dans lequel le fait d'empêcher (425), en utilisant le contrôleur de machine, le fonctionnement de la machine à force motrice en réponse aux commandes d'entrée utilisateur provenant du module d'entrée utilisateur si l'opérateur est déterminé comme étant à proximité de la machine à force motrice comprend en outre le fait d'éteindre un moteur de la machine à force motrice.

12. Procédé selon la revendication 7, dans lequel le fait d'arrêter (435) la machine à force motrice, en utilisant le contrôleur de machine, s'il est déterminé que l'opérateur et le module d'entrée utilisateur sont hors de la plage prédéterminée, comprend en outre le fait d'éteindre un moteur de la machine à force motrice.
